# EUROPEAN PATENT SPECIFICATION

(11) **EP 3 081 467 B1**
(45) Date of publication and mention of the grant of the patent: **19.06.2019**
(21) Application number: 15194428.7
(22) Date of filing: 13.11.2015
(51) Int. Cl.: B62J 1/00, G06Q 10/08, G06Q 30/06

(54) **BICYCLE SADDLE SELECTING METHOD**
FAHRRADSATTEL-AUSWAHLVERFAHREN
PROCÉDÉ DE SÉLECTION DE SELLE DE BICYCLETTE

(30) Priority: 13.04.2015 TW 104111841
(43) Date of publication of application: 19.10.2016
(73) Proprietor: Velo Enterprise Co., Ltd., Dajia Township, Taichung County 437 (TW)
(72) Inventor: YU, Tsai-Yun, 437 TAICHUNG CITY (TW)
(74) Representative: Straus, Alexander

(56) References cited:
- EP-A1- 2 535 248
- EP-A2- 2 703 261
- US-A1- 2010 306 160

## Description

### BACKGROUND OF THE INVENTION

### 1. Field of the Invention

The present invention relates generally to bicycle saddles and more particularly, to a bicycle saddle selecting method.

### 2. Description of the Related Art

There are more and more people riding bicycles and requiring better and better performance of the whole bicycle or some accessories of the bicycle. For various usage requirements, the dealers in the bicycle saddle industry continuously improve and innovate the bicycle saddles in many aspects such as shape, hardness, elasticity, and so on, so that there are more and more varieties in the commercially available bicycle saddles. As a result, various users all have the chance to pick out the bicycle saddle which completely conforms to the personal usage requirements of the users. However, too many options of bicycle saddle bring the selectors, including the end consumers and the dealers in the bicycle selling industry, a certain confusion and time-consumption in making a selection from the numerous available bicycle saddles.

For example, EP 2 703 261 describes a method for selecting a bicycle saddle according to rider's activity criteria and the distance between the rider's seat bones; this method foresees the calculation of the seat bones distance through an algorithm.

### SUMMARY OF THE INVENTION

The present invention has been accomplished in view of the above-noted circumstances. It is an objective of the present invention to provide a bicycle saddle selecting method, through which the process of selecting the bicycle saddle is relatively easier and time-saving.

To attain the above objective, the present invention provides a bicycle saddle selecting method according to claim 1.

The sorting indexes may comprise the speed of riding without the distance of riding. Alternately, the sorting indexes may comprise the distance of riding without the speed of riding. Alternately, the sorting indexes may comprise both the speed of riding and the distance of riding.

In an embodiment of the present invention, the sorting index of the bicycle type is set with five scales, which respectively correspond to the bicycle types of: kid bicycle, city bicycle, sport bicycle, mountain bicycle, and road bicycle; the sorting index of the frequency of riding is set with five scales, which respectively correspond to the frequencies of riding of random manner, monthly manner, weekly manner, twice a week, and daily manner; the sorting index of the speed of riding is set with five scales, which respectively correspond to the speed ranges of: 0-15 kilometers per hour, 15-20 kilometers per hour, 20-30 kilometers per hour, 30-40 kilometers per hour, and 40-50 kilometers per hour; the sorting index of the distance of riding is set with five scales, which respectively correspond to the distance ranges of: less than 5 kilometers, 5-15 kilometers, 15-30 kilometers, 30-50 kilometers, and 50-100 kilometers or more than 100 kilometers.

The sorting indexes may, but not limited to, further comprise skill of riding. The scale selected for the skill of riding in the step b) may be derived from self-estimation of a user. Alternately, the scales of the skill of riding may be specifically set according to another index related to the skill of riding. For example, the sorting index of the skill of riding may be set with the scales according to user identities, and may be set with five scales, which respectively correspond to the user identities of: kid, adult, athlete, amateur contestant, and professional contestant. Alternately, the sorting index of the skill of riding may be set with the scales according to experience of riding, and may be set with five scales, which respectively correspond to the experience of riding of: no experience, less than two years, two to five years, five to ten years, and more than ten years.

The aforesaid five scales of each sorting index may correspond to the numerical values of 1-5, and the sorting value obtained by averaging the numerical values of the selected scales of the five sorting indexes is ranged from one to five. Each of the groups of bicycle saddles is set beforehand to correspond to a numerical number or a numerical range in the range from one to five, so that the sorting value can correspond to the numerical number or numerical range of one of the groups, which is accordingly considered as the fitting group.

In this way, the selector, no matter the end consumer or the dealer in the bicycle selling industry, only needs to select the most conformable bicycle saddle with the usage requirements from the fitting group sorted out by the aforesaid method. This means the selector doesn't need to make the selection from numerous different bicycle saddles. Therefore, the process of selecting the bicycle saddle is relatively easier and time-saving through the bicycle saddle selecting method of the present invention.

### BRIEF DESCRIPTION OF THE DRAWINGS

The present invention will become more fully understood from the detailed description given herein below and the accompanying drawings which are given by way of illustration only, and thus are not limitative of the present invention, and wherein:

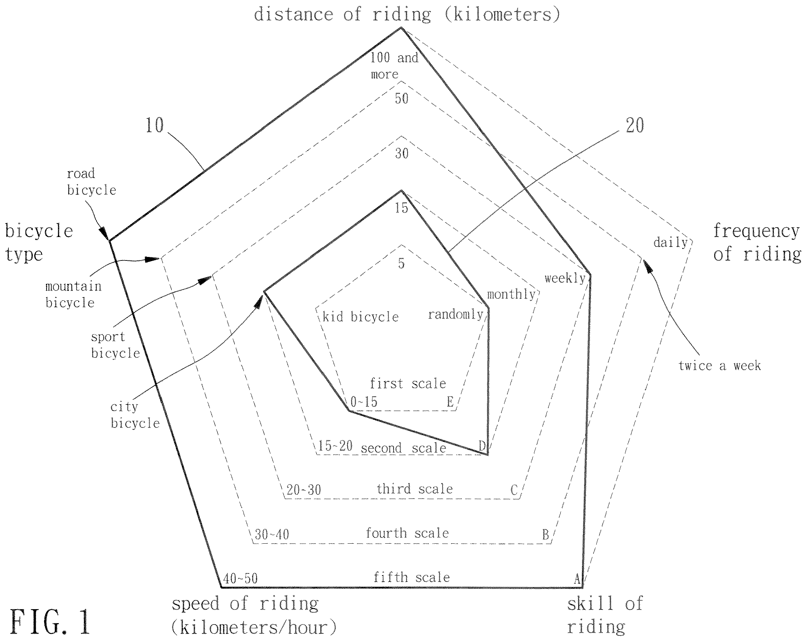

FIG. 1 is a radar chart showing a bicycle saddle selecting method according to a preferred embodiment of the present invention.

### DETAILED DESCRIPTION OF THE INVENTION

Referring to FIG. 1, a bicycle saddle selecting method according to a preferred embodiment of the present invention comprises the following steps.
a) Classify bicycle saddles having various specifications into a plurality of groups, and set a plurality of scales for each of a plurality of sorting indexes including a bicycle type, a frequency of riding, and at least one of a speed of riding and a distance of riding.
This step is performed by the dealers in the industry of manufacturing or selling the bicycle saddles. The bicycle saddles for sale, which have various specifications, are roughly classified into the aforesaid a plurality of groups, and may be classified according to the properties of the bicycle saddles, such as material, weight, shape, having a shock absorber or not, the capability of the shock absorber, supporting capability, extent of comfort, and so on. Besides, each group may, but not limited to, comprise a plurality of different bicycle saddles, so that the bicycle saddles in the same group have different performance or particulars in specifications. As to the sorting indexes adopted in the step a) and the scales set for the sorting indexes, as shown in FIG. 1, this embodiment adopts the sorting indexes of the bicycle type, the frequency of riding, the speed of riding, the distance of riding and the skill of riding, and each of the sorting indexes is set with five scales, i.e. the first to fifth scales. As shown in the following table 1, each of the scales of the sorting indexes can be set to correspond to a numerical value. Specifically speaking, the first to fifth scales of each sorting index correspond to the numerical values of 1-5, respectively. However, the amount of the scales of each sorting index and the numerical values thereof are not limited to that illustrated in this embodiment.

**Table 1**

| scale | numerical value | bicycle type | frequency of riding | speed of riding | distance of riding | skill of riding |
|---|---|---|---|---|---|---|
| first | 1 | kid bicycle | randomly | 0-15 kilometers per hour | less than 5 kilometers | E |
| second | 2 | city bicycle | monthly | 15-20 kilometers per hour | 5-15 kilometers | D |
| third | 3 | sport bicycle | weekly | 20-30 kilometers per hour | 15-30 kilometers | C |
| fourth | 4 | mountain bicycle | twice a week | 30-40 kilometers per hour | 30-50 kilometers | B |
| fifth | 5 | road bicycle | daily | 40-50 kilometers per hour | 50-100 kilometers or more than 100 kilometers | A |

The first to fifth scales of the sorting index of the bicycle type, i.e. the type of the bicycle used by the user, may, but not limited to, respectively correspond to the bicycle types of: kid bicycle, city bicycle, sport bicycle, mountain bicycle, and road bicycle. The first to fifth scales of the sorting index of the frequency of riding, i.e. the frequency of the user riding the bicycle, may, but not limited to, respectively correspond to the frequencies of riding of random manner, monthly manner, weekly manner, twice a week, and daily manner. The first to fifth scales of the sorting index of the speed of riding, i.e. the usual speed of the user riding the bicycle, may, but not limited to, respectively correspond to the speed ranges of: 0-15 kilometers per hour, 15-20 kilometers per hour, 20-30 kilometers per hour, 30-40 kilometers per hour, and 40-50 kilometers per hour. The first to fifth scales of the sorting index of the distance of riding, i.e. the usual distance of the user riding the bicycle, may, but not limited to, respectively correspond to the distance ranges of: less than 5 kilometers, 5-15 kilometers, 15-30 kilometers, 30-50 kilometers, and 50-100 kilometers or more than 100 kilometers.
b) Select one of the scales for each of the sorting indexes according to usage requirements.
This step is performed by a selector, who may be the end consumer or the dealer in the bicycle selling industry, when the selector picks out the bicycle saddle for purchase purpose. Based on the corresponding contents of the scales of the sorting indexes set by the dealer in the bicycle saddle industry in the step a), the selector select one scale from the five scales for each of the five sorting indexes according to the type of the bicycle used by the user, the frequency of the user riding the bicycle, and the usual speed and distance of the user riding the bicycle in a way that the corresponding contents of the selected scales of the sorting indexes are more conformable with the actual usage requirements than that of the other scales of the sorting indexes.
As mentioned above, in addition to the bicycle type and the frequency of riding, at least one of the speed of riding and the distance of riding is necessarily included in the sorting indexes, which means the amount of the sorting indexes is at least three. In other words, the sorting indexes may comprise the speed of riding but not comprise the distance of riding. Alternately, the sorting indexes may comprise the distance of riding but not comprise the speed of riding. Alternately, the sorting indexes may comprise both the speed of riding and the distance of riding.
It is to be mentioned that the sorting indexes adopted in the step a may, but not limited to, comprise the skill of riding. In this embodiment, the sorting index of the skill of riding is set with five scales, which respectively correspond to the greater extent A to the lesser extent E. In the step b), the scale selected for the skill of riding may be derived from self-estimation of the user, which means the user subjectively estimates his/her own skill of riding to determine the scale of the skill of riding. During the process of self-estimation, the user can estimate his/her own skill of riding according to some objective conditions thereof, such as how many years of experience of riding, having learned from a professional coach or not, being an amateur contestant or a professional contestant or not, and so on, so as to decide one scale from the first to fifth scales of the skill of riding.
Alternately, in the step a) the dealer in the bicycle saddle manufacturing or selling industry can specify the sorting index of the skill of riding by another index related to the skill of riding, such as user identity, experience of riding, and so on, so that the user can easily make the selection according the personal condition thereof. For example, according to user identities, the sorting index of the skill of riding may be set with five scales, which respectively correspond to the user identities of: kid, adult, athlete, amateur contestant, and professional contestant. Alternately, according to experience of riding, the sorting index of the skill of riding may be set with five scales, which respectively correspond to the experience of riding of: no experience, less than two years, two to five years, five to ten years, and more than ten years. In other words, any index related to the skill of riding, such as the aforesaid user identity or experience of riding, is within the scope of the skill of riding defined in the present invention.
c) Sort a fitting group from the groups by means of the selected scales of the sorting indexes in the step b).

Specifically speaking, this step may be performed by summing or averaging the numerical values of the selected scales of the sorting indexes in the step b) to obtain a sorting value, and then sorting the fitting group from the groups by means of the sorting value.

For the first application example 10 shown in FIG. 1 and the following table 2, which may represent a high level road rider, the sorting value obtained by averaging the numerical values of the selected scales of the five sorting indexes is 4.6. The sorting value of the first application example 10 should correspond to the group including the bicycle saddles having the minimal degree of weight and size, so that the bicycle saddles can meet the usage requirements of such road rider. Such road rider usually requires the maximum efficiency instead of comfortableness, and requires just appropriate support from the saddle because such road rider puts only a part of his weight on the saddle and most of his weight on the pedals and the handlebars.

For the second application example 20 shown in FIG. 1 and the following table 2, which may represent a casual rider or a casual e-bike rider who rides occasionally for transportation or an easy exercise, the sorting value obtained by averaging the numerical values of the selected scales of the five sorting indexes is 1.6. The sorting value of the second application example 20 should correspond to the group including the wider and more padded bicycle saddles, which meet the usage requirements of such casual rider by providing great support and comfortableness. Such casual rider usually puts most of his weight on the saddle and pedals relatively more lightly in pedaling force and shortly in traveling time.

**Table 2**

| | first application example | second application example |
|---|---|---|
| numerical value corresponding to the scale of the bicycle type | 5 | 2 |
| numerical value corresponding to the scale of the frequency of riding | 3 | 1 |
| numerical value corresponding to the scale of the speed of riding | 5 | 1 |
| numerical value corresponding to the scale of the distance of riding | 5 | 2 |
| numerical value corresponding to the scale of the skill of riding | 5 | 2 |
| sorting value (average) | 4.6 | 1.6 |

In other words, in the step a) the dealer in the saddle manufacturing or selling industry can classify the bicycle saddles having various specifications into a plurality of groups, e.g. five groups, and set each group to correspond to a specific sorting value or a range of sorting value. For example, the sorting value corresponding to a fifth group is larger than 4.0 and smaller than or equal to 5.0, the sorting value corresponding to a fourth group is larger than 3.0 and smaller than or equal to 4.0, the sorting value corresponding to a third group is larger than 2.0 and smaller than or equal to 3.0, the sorting value corresponding to a second group is larger than 1.0 and smaller than or equal to 2.0, and the sorting value corresponding to a first group is equal to 1.0. Therefore, in the step c) the sorting value can be obtained by averaging the numerical values of the selected scales of the sorting indexes in the step b), and the sorting value can be used to sort the fitting group from the groups. It should be appreciated that the numerical values corresponding to the groups are not limited to that mentioned above. For example, the numerical values corresponding to the first to fifth groups may be set as that the sorting value corresponding to the first group is larger than or equal to 1.0 and smaller than 1.5, the sorting value corresponding to the second group is larger than or equal to 1.5 and smaller than 2.5, the sorting value corresponding to the third group is larger than or equal to 2.5 and smaller than 3.5, the sorting value corresponding to the fourth group is larger than or equal to 3.5 and smaller than 4.5, and the sorting value corresponding to the fifth group is larger than or equal to 4.5 and smaller than or equal to 5.0. Besides, the bicycle saddles in the same group may have different performance or particulars in specifications, as mentioned above. Therefore, after sorting out the fitting group from the groups through the aforesaid method, the selector can further choose the most conformable bicycle saddle with the usage requirements from the fitting group. In other words, the bicycle saddle selecting method of the present invention can simplify the process of selecting the bicycle saddle. For example, in the condition that the bicycle saddles are classified into five groups, sorting out the fitting group from the five groups through the method of the present invention will focus the selector on roughly 20% of all the available bicycle saddles. In this way, the selector only needs to select the most conformable bicycle saddle with the usage requirements from the small amount of bicycle saddles, instead of making the selection from numerous different bicycle saddles. Therefore, the process of selecting the bicycle saddle is relatively easier and time-saving through the bicycle saddle selecting method of the present invention.

## Claims

1. A bicycle saddle selecting method, characterized comprising the steps of:
a) classifying bicycle saddles having various specifications into a plurality of groups, and setting a plurality of scales for each of a plurality of sorting indexes including a bicycle type, a frequency of riding, and at least one of a speed of riding and a distance of riding;
b) selecting one of the scales for each of the sorting indexes according to usage requirements; and
c) sorting a fitting group from the groups by means of the selected scales of the sorting indexes in the step b),
**characterized in that** each of the scales of the sorting indexes corresponds to a numerical value; in the step c), a sorting value is obtained by summing or averaging the numerical values of the selected scales of the sorting indexes in the step b), and the sorting value is used to sort the fitting group from the groups.

2. The bicycle saddle selecting method as claimed in claim 1, **characterized in that** the sorting index of the bicycle type is set with five said scales, which respectively correspond to the bicycle types of kid bicycle, city bicycle, sport bicycle, mountain bicycle, and road bicycle.

3. The bicycle saddle selecting method as claimed in claim 1, **characterized in that** the sorting index of the frequency of riding is set with five said scales, which respectively correspond to the frequencies of riding of random manner, monthly manner, weekly manner, twice a week, and daily manner.

4. The bicycle saddle selecting method as claimed in claim 1, **characterized in that** the sorting indexes comprise the speed of riding, which is set with five said scales respectively corresponding to speed ranges of 0-15 kilometers per hour, 15-20 kilometers per hour, 20-30 kilometers per hour, 30-40 kilometers per hour, and 40-50 kilometers per hour.

5. The bicycle saddle selecting method as claimed in claim 1, **characterized in that** the sorting indexes comprise the distance of riding, which is set with five said scales respectively corresponding to distance ranges of less than 5 kilometers, 5-15 kilometers, 15-30 kilometers, 30-50 kilometers, and 50-100 kilometers or more than 100 kilometers.

6. The bicycle saddle selecting method as claimed in claim 1, **characterized in that** the sorting indexes comprise both the speed of riding and the distance of riding.

7. The bicycle saddle selecting method as claimed in claim 1, **characterized in that** the sorting indexes further comprise skill of riding.

8. The bicycle saddle selecting method as claimed in claim 7, **characterized in that** the scale selected for the skill of riding in the step b) is derived from self-estimation of a user.

9. The bicycle saddle selecting method as claimed in claim 7, **characterized in that** the sorting index of the skill of riding is set with a plurality of scales according to a plurality of user identities.

10. The bicycle saddle selecting method as claimed in claim 9, **characterized in that** the sorting index of the skill of riding is set with five said scales, which respectively correspond to the user identities of kid, adult, athlete, amateur contestant, and professional contestant.

11. The bicycle saddle selecting method as claimed in claim 7, **characterized in that** the sorting index of the skill of riding is set with a plurality of scales according to user's experience of riding.

12. The bicycle saddle selecting method as claimed in claim 11, **characterized in that** the sorting index of the skill of riding is set with five said scales, which respectively correspond to the user's experience of riding of no experience, less than two years, two to five years, five to ten years, and more than ten years.

## Patentansprüche

1. Fahrradsattel-Auswahlverfahren, **dadurch gekennzeichnet, dass** es die Schritte umfasst:
a) Einstufen von Fahrradsätteln, mit verschiedenen Spezifikationen in mehrere Gruppen, und Setzen mehrerer Normierungen für jeden von mehreren Sortierindizes einschließlich eines Fahrradtyps, einer Fahrhäufigkeit, und mindestens einem von einer Fahrgeschwindigkeit und einer Fahrdistanz;
b) Auswählen einer der Normierungen für jeden der Sortierindizes entsprechend den Verwendungs-Anforderungen; und
c) Sortieren einer passenden Gruppe aus den Gruppen mittels der ausgewählten Normierungen der Sortierindizes im Schritt b),
**dadurch gekennzeichnet, dass** jede der Normierungen der Sortierindizes einem numerischen Wert entspricht; wobei im Schritt c), ein Sortierwert durch Addieren oder Mittelwertbildung der numerischen Werte der ausgewählten Normierungen der Sortierindizes in dem Schritt b) erhalten wird, und wobei der Sortierwert verwendet wird, um die passende Gruppe aus den Gruppen zu sortieren.

2. Fahrradsattel-Auswahlverfahren nach Anspruch 1, **dadurch gekennzeichnet, dass** der Sortierindex des Fahrradtyps aus fünf der Normierungen festgelegt wird, die jeweils den Fahrradtypen Kinderfahrrad, Tourenrad, Sportfahrrad, Mountainbike, und Rennrad entsprechen.

3. Fahrradsattel-Auswahlverfahren nach Anspruch 1, **dadurch gekennzeichnet, dass** der Sortierindex der Fahrhäufigkeit aus fünf der Normierungen festgelegt wird, die jeweils den Fahrhäufigkeiten unregelmäßig, monatlich, wöchentlich, zweimal pro Woche, und täglich entsprechen.

4. Fahrradsattel-Auswahlverfahren nach Anspruch 1, **dadurch gekennzeichnet, dass** die Sortierindizes die Fahrgeschwindigkeit umfassen, die aus fünf der Normierungen festgelegt wird, die jeweils den Geschwindigkeitsbereichen von 0-15 Kilometern pro Stunde, 15-20 Kilometern pro Stunde, 20-30 Kilometern pro Stunde, 30-40 Kilometern pro Stunde, und 40-50 Kilometern pro Stunde entsprechen.

5. Fahrradsattel-Auswahlverfahren nach Anspruch 1, **dadurch gekennzeichnet, dass** die Sortierindizes die Fahrdistanz umfassen, die aus fünf der Normierungen festgelegt wird, die jeweils den Distanzbereichen von weniger als 5 Kilometern, 5-15 Kilometern, 15-30 Kilometern, 30-50 Kilometern, und 50-100 Kilometern oder mehr als 100 Kilometern entsprechen.

6. Fahrradsattel-Auswahlverfahren nach Anspruch 1, **dadurch gekennzeichnet, dass** die Sortierindizes sowohl die Fahrgeschwindigkeit als auch die Fahrdistanz umfassen.

7. Fahrradsattel-Auswahlverfahren nach Anspruch 1, **dadurch gekennzeichnet, dass** die Sortierindizes weiter eine Fahrfertigkeit umfassen.

8. Fahrradsattel-Auswahlverfahren nach Anspruch 7, **dadurch gekennzeichnet, dass** die Normierung, die für die Fahrfertigkeit in dem Schritt b) ausgewählt wurde, von einer Selbsteinschätzung eines Nutzer abgeleitet wird.

9. Fahrradsattel-Auswahlverfahren nach Anspruch 7, **dadurch gekennzeichnet, dass** der Sortierindex der Fahrfertigkeit aus mehreren Normierungen entsprechend mehrerer Nutzeridentitäten festgelegt wird.

10. Fahrradsattel-Auswahlverfahren nach Anspruch 9, **dadurch gekennzeichnet, dass** der Sortierindex der Fahrfertigkeit aus fünf der Normierungen festgelegt wird, die jeweils den Nutzeridentitäten Kind, Erwachsener, Athlet, Amateur-Fahrer, und Profi-Fahrer entsprechen.

11. Fahrradsattel-Auswahlverfahren nach Anspruch 7, **dadurch gekennzeichnet, dass** der Sortierindex der Fahrfertigkeit aus mehreren Normierungen entsprechend der Nutzer-Fahrerfahrung festgelegt wird.

12. Fahrradsattel-Auswahlverfahren nach Anspruch 11, **dadurch gekennzeichnet, dass** der Sortierindex der Fahrfertigkeit aus fünf der Normierungen festgelegt wird, die jeweils den Nutzer-Fahrerfahrungen keine Erfahrung, weniger als zwei Jahre, zwei bis fünf Jahre, fünf bis zehn Jahre, und mehr als zehn Jahre Erfahrung entsprechen.

## Revendications

1. Procédé de sélection de selle de bicyclette, **caractérisé en ce qu'**il comprend les étapes de :
a) classification de selles de bicyclette possédant diverses spécifications en une pluralité de groupes et établissement d'une pluralité d'échelles pour chacun d'une pluralité d'indices de tri comprenant un type de bicyclette, une fréquence de roulage et au moins l'une parmi une vitesse de roulage et une distance de roulage ;
b) sélection de l'une des échelles pour chacun des indices de tri en fonction des exigences d'utilisation ; et
c) choix d'un groupe d'adéquation parmi les groupes au moyen des échelles sélectionnées des indices de tri dans l'étape b),
**caractérisé en ce que** chacune des échelles des indices de tri correspond à une valeur numérique ; dans l'étape c), une valeur de tri est obtenue par calcul de la somme ou de la moyenne des valeurs numériques des échelles sélectionnées des indices de tri dans l'étape b) et la valeur de tri est utilisée pour choisir le groupe d'adéquation parmi les groupes.

2. Procédé de sélection de selle de bicyclette selon la revendication 1, **caractérisé en ce que** l'indice de tri du type de bicyclette est établi à l'aide de cinq dites échelles, qui correspondent respectivement aux types de bicyclette : bicyclette pour enfant, bicyclette urbaine, bicyclette de sport, bicyclette de montagne et bicyclette routière.

3. Procédé de sélection de selle de bicyclette selon la revendication 1, **caractérisé en ce que** l'indice de tri de la fréquence de roulage est établi à l'aide de cinq dites échelles, qui correspondent respectivement aux fréquences de roulage de manière aléatoire, de manière mensuelle, de manière hebdomadaire, de manière bihebdomadaire et de manière quotidienne.

4. Procédé de sélection de selle de bicyclette selon la revendication 1, **caractérisé en ce que** les indices de tri comprennent la vitesse de roulage, qui est établie à l'aide de cinq dites échelles correspondant respectivement aux plages de vitesses : de 0 à 15 kilomètres par heure, de 15 à 20 kilomètres par heure, de 20 à 30 kilomètres par heure, de 30 à 40 kilomètres par heure et de 40 à 50 kilomètres par heure.

5. Procédé de sélection de selle de bicyclette selon la revendication 1, **caractérisé en ce que** les indices de tri comprennent la distance de roulage, qui est établie à l'aide de cinq dites échelles correspondant respectivement aux plages de distance :
inférieure à 5 kilomètres, de 5 à 15 kilomètres, de 15 à 30 kilomètres, de 30 à 50 kilomètres et de 50 à 100 kilomètres ou supérieure à 100 kilomètres.

6. Procédé de sélection de selle de bicyclette selon la revendication 1, **caractérisé en ce que** les indices de tri comprennent à la fois la vitesse de roulage et la distance de roulage.

7. Procédé de sélection de selle de bicyclette selon la revendication 1, **caractérisé en ce que** les indices de tri comprennent en outre la compétence de roulage.

8. Procédé de sélection de selle de bicyclette selon la revendication 7, **caractérisé en ce que** l'échelle sélectionnée pour la compétence de roulage dans l'étape b) est dérivée de l'auto-estimation d'un utilisateur.

9. Procédé de sélection de selle de bicyclette selon la revendication 7, **caractérisé en ce que** l'indice de tri de la compétence de roulage est établi à l'aide d'une pluralité d'échelles selon une pluralité d'identités d'utilisateur.

10. Procédé de sélection de selle de bicyclette selon la revendication 9, **caractérisé en ce que** l'indice de tri de la compétence de roulage est établi à l'aide de cinq dites échelles correspondant respectivement aux identités d'utilisateur : enfant, adulte, athlète, coureur amateur et coureur professionnel.

11. Procédé de sélection de selle de bicyclette selon la revendication 7, **caractérisé en ce que** l'indice de tri de la compétence de roulage est établi à l'aide d'une pluralité d'échelles selon l'expérience de roulage de l'utilisateur.

12. Procédé de sélection de selle de bicyclette selon la revendication 11, **caractérisé en ce que** l'indice de tri de la compétence de roulage est établi à l'aide de cinq dites échelles correspondant respectivement à l'expérience de roulage de l'utilisateur :
sans expérience, expérience de moins de deux ans, de deux à cinq ans, de cinq à dix ans et de plus de dix ans.
